# NEW EUROPEAN PATENT SPECIFICATION

(11) **EP 0 323 421 B2**
(45) Date of publication and mention of the opposition decision: **26.01.2000**
(45) Mention of the grant of the patent: 20.05.1992
(21) Application number: 88850382.8
(22) Date of filing: 04.11.1988
(51) Int. Cl.: A61C 8/00

(54) **Spacer for dental implants**
Verbindungselement für Zahnimplantate
Elément de liaison pour implants dentaires

(30) Priority: 18.11.1987 SE 8704514
(43) Date of publication of application: 05.07.1989
(73) Proprietor: Nobel Biocare AB, 402 26 Göteborg (SE)
(72) Inventor: Rangert, Bo, S-435 00 Mölnlycke (SE); Jörnéus, Lars, S-415 16 Göteborg (SE); Holmberg, Claes, S-416 74 Göteborg (SE); Andersson, Matts, S-830 22 Faker (SE)
(74) Representative: Moll, Walter, Dipl.-Phys., Dr.

(56) References cited:
- EP-A- 0 000 549
- EP-A- 0 216 031
- EP-A- 0 313 222
- WO-A-83/00616
- DE-A- 2 413 883
- GB-A- 2 176 709
- US-A- 4 051 559
- US-A- 4 177 562
- US-A- 4 416 629
- US-A- 4 645 453

## Description

### TECHNICAL FIELD

The present invention relates to an angulated spacer for a dental implant disposed between a fixture implanted in the jaw bone and a dental bridge or artificial tooth.

### BACKGROUND ART

It is previously known in this art to permanently anchor oral prostheses in the jaw bone by means of helical anchorage elements, so-called fixtures, of a biocompatible material, preferably pure titanium. That method which has proved to give the highest anchorage stability and which has been used clinically with considerable success for more than 20 years is the so-called osseo-integration method developed by Professor Per-Ingvar Brånemark et. al. and described in, for example,
Brånemark/Zarb/Albrektsson: "Tissue-Integrated Prostheses", Quintessence Books, 1985.

The method is based on a highly exact and atraumatic implantation technique of the fixture such that direct contact, i.e. an exact adaptation without interjacent bonding tissue, takes place between the fixture and the bone tissue proper. Such a direct contact between fixture and bone tissue creates the best preconditions for a really permanent anchorage of a dental prosthesis.

The helical fixtures which are of pure titanium are surgically implanted in the jaw bone in a first operation which is followed by an unloaded healing phase of critical length during which time the fixture is covered by intact mucous membrane. During this healing phase, the bone tissue grows onto and forms a unit with the implanted fixture. In a second operation, the fixture is then exposed and a spacer is applied to the fixture with the aid of a spacer screw. The dental prosthesis proper - in the form of a bridge construction - is then anchored in place by means of an anchorage screw which in its turn anchors in the spacer screw.

A bridge construction is anchored with the aid of a plurality of fixtures, for example six in number, and corresponding spacers which constitute connection members between the bridge construction and the fixtures. In order to be able to accomodate the extreme oral loadings to which the screw connection is exposed, the spacer is made of a biocompatible material of extremely good mechanical strength properties, for example titanium or the like.

To impart increased flexibility to the implant system, it is previously known in this art to use angulated spacers, see for example US-PS 3,732,621, EP-A- 0 216 031 and implant systems of the ROBUTMENT type. The reason for introducing in certain cases, angulated spacers is that, using conventional systems, the anchorage screw for the dental bridge may some times be located in an unsuitable position. By means of an angulated spacer, the anchorage screw can be placed in a more favourable position from the points of view of cosmetic appearance and dental technology.

A factor common to all of the prior-art angled spacers is that they are adjustable, which is a considerable disadvantage since it is difficult to reestablish the exact position if the original setting is loosened. This makes it difficult to get a dental bridge in position if the original setting has been disrupted. Moreover, such constructions are mechanically flimsy and suffer from poor strength because they are based on a combination of a ball with a narrow neck.

A further disadvantage inherent in these prior-art constructions is that pockets occur where bacteria may gather and give rise to inflammation.

### OBJECT OF THE PRESENT INVENTION

The object of the present invention is to obviate the above-outlined drawbacks and problems and to devise an angled spacer in which both the connection direction and screw connection are angled in relation to the direction of the fixture. The solution to these problems is apparent from the characterizing clause of appended Claim 1.

### BRIEF DESCRIPTION OF THE ACCOMPANYING DRAWINGS

The nature of the present invention and its aspects will be more readily understood from the following brief description of the accompanying Drawings, and discussion relating thereto.

In the accompanying Drawings:

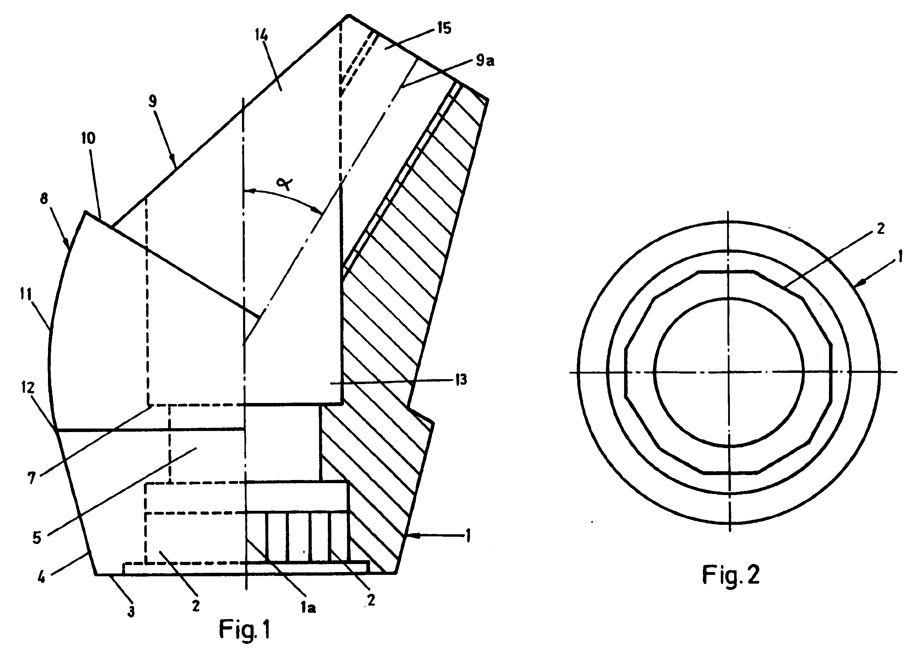

Fig. 1 is a side elevation, partly in section, of the angled spacer;
Fig. 2 is an end elevation of the spacer of Fig. 1;
Fig. 3 shows a connection sleeve adapted to the angled spacer of Fig. 1; and
Fig. 4 is a schematic diagram showing the spacer assembled together with the fixture and connection sleeve.

### DESCRIPTION OF ILLUSTRATIVE EMBODIMENT

Referring to the Drawings, the spacer includes a conical base portion 1 intended to cooperate with the upper portion of a fixture of that type which includes an upper hexagon. Such fixtures are previously known in the art and will not, therefore, be described in greater detail here. The base portion is disposed such that its line of symmetry 1a coincides with the line of symmetry of the fixture. The base portion is further designed so as to have interior dodecagonal geometrical configuration 2 which fits the hexagon of the fixture, implying that the spacer, on being turned, will have 30° instead of 60° between the directions of deviation, and an outer annular support surface 3 which abuts against the shoulder portion of the fixture. The conical circumferential surface 4 corresponds with good fit to the upper cylindrical side surface of the fixture so that the surface beneath the level of the gum will be completely smooth.

The dodecagonal "star" 2 constitutes a rotational lock and provides twelve fixed directions for the spacer.

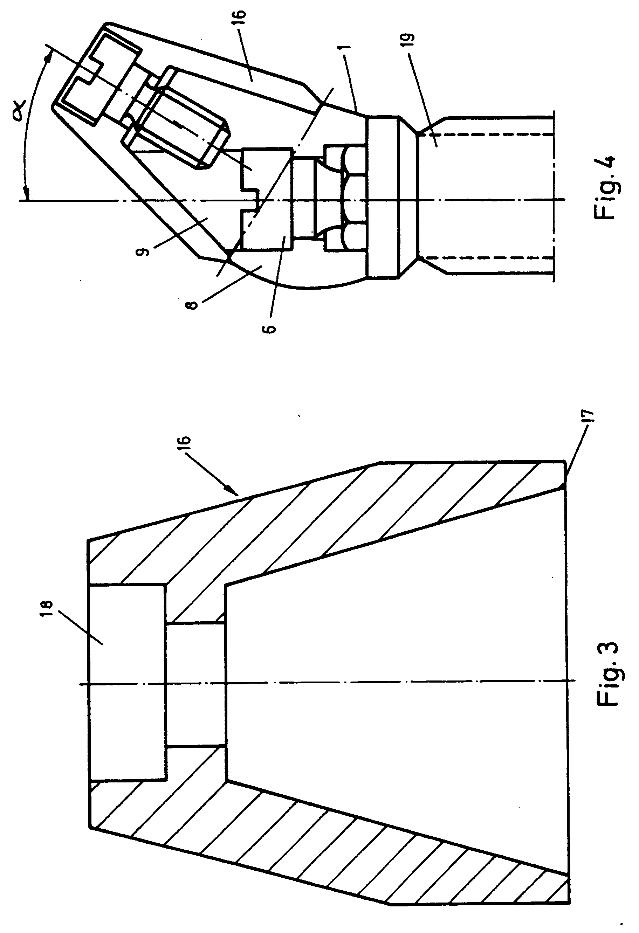

The base portion further includes a cylindrical through-hole 5 for a spacer screw (not shown) intended to engage with the interiorly threaded bore in the upper portion of the fixture for fixedly locking the spacer to the fixture. The head 6 of the spacer screw (see Fig. 4) then abuts against an upper interiorly circular heel 7 in the spacer. The spacer screw may be a standard component included in the Nobelpharma Implant System.

At its top, the base portion 1 merges, via a segmented intermediate portion 8, into a conical upper portion 9 whose line of symmetry 9a is angled in relation to the line of symmetry 1a of the base portion. The angle of deviation α lies preferably within the range of between 25° and 40°, in this case at 32°. The base of the conical upper portion 9 merges in the segmented portion 8 via an annular shoulder 10 whose function will be described below.

The circumferential surface 11 of the segmented portion 8 connects at its bottom with an even transition 12 to the conical base portion, and the portion 8 is provided with an inner cylindrical cavity 13 for accommodating the screw head 6 of the above-mentioned spacer screw. Thus, the screw union which holds the spacer in place against the fixture is coaxial therewith and the spacer screw is passed in through a hole 14 in the conical circumferential surface of the upper portion. The conical upper portion 9 displays a relatively large conical angle, which facilitates connection of the dental bridge.

The conical upper portion 9 is provided with a threaded hole 15 for the screw union which unites the spacer with a sleeve cast in the dental bridge. Thus, the screw union is coaxial with this sleeve.

A suitable connection sleeve 16 for the dental bridge is illustrated in Fig. 3. The sleeve is symmetrically circular and rests with its broader base 17 against the shoulder (abutment) 10 on the spacer. The sleeve is not in contact with the conical surface of the spacer. This is an advantage, since a conical connection always requires much greater precision and often entails that stresses are embodied in the construction. The upper portion of the sleeve includes a recess 18 for the screw union. The connection sleeve is cast, at a dental technology laboratory, in the dental bridge and is united therewith. It is also conceivable to make a direct casting of a dental bridge with holes whose inner surfaces are analogous with the connection sleeves.

It will be apparent from the above description that both the spacer and the dental bridge are secured by screw unions and with a fixed angle of deflection between both of the screw unions. The connection sleeve 16 covers the screw hole 14 in the upper region of that screw which unites the spacer with the fixture. Since the upper portion 9 of the spacer has been given a conical design, connection will be permitted of the dental bridge to several mutually diverging spacers.

The spacer is made of titanium or a titanium-containing material, while the connection sleeve may be made of gold.

Finally, Fig. 4 shows the spacer assembled together with a fixture 19 and a connection sleeve 16.

The present invention should not be considered as restricted to that described above and shown on the Drawings, many modifications being conceivable without departing from the scope of the appended Claims.

## Claims

1. An angulated spacer for a dental implant adapted at its one end for attachment to a fixture (19) implanted in the jaw bone and at its other end adapted to support a dental prosthesis **characterized** in that said spacer is made as a unitary member comprising a base portion (1) being lockable in a fixed rotational position with respect to the fixture by means of a first screw union (6) and an upper portion (9) having a second screw union for securing the dental prosthesis, said second screw union forming a fixed angle (α) with respect to the first screw union (6),
and in that said base portion (1) has an interior geometrical configuration (20) designed to fit an upper hexagon of the fixture (19) so as to constitute a rotational lock providing twelve fixed directions for the spacer.

2. An angulated spacer according to claim 1 **characterized** in that the first screw union (6) is coaxial with the fixture (19) and the second screw union is coaxial with a connection sleeve (16) cast in the dental prosthesis or a corresponding connection surface in the dental prosthesis.

3. An angulated spacer according to claim 2 **characterized** in that the connection sleeve (16) or the corresponding connection surface in the dental prosthesis, respectively, covers the screw hole (14) formed in the spacer by the first screw union (6).

4. An angulated spacer according to claim 3 **characterized** by a shoulder (10) on which the connection sleeve (16) or the dental prosthesis itself rests.

5. An angulated spacer according to claim 1 **characterized** by a conical base portion (1), a segmented intermediate portion (8) and a conical upper portion (9).

6. An angulated spacer according to claim 1 **characteriz**ed in that said fixed angle (α) between the screw unions is within the range of between 25° and 40°.

## Patentansprüche

1. Winkelförmiger Adapter für Zahnimplantate, der an seinem Ende zur Verbindung mit einer im Kieferknochen implantierten Verankerung (19) und an seinem anderen Ende zur Halterung einer Zahnprothese ausgebildet ist, dadurch **gekennzeichnet,** daß der Adapter als einstückiges Teil ausgebildet ist mit einem Basisteil (1), der in fester Drehstellung relativ zur Verankerung mittels einer ersten Schraubverbindung (6) festlegbar ist, und einem Oberteil (9), der eine zweite Schraubverbindung zum Befestigen der Zahnprothese aufweist, wobei die zweite Schraubverbindung einen festen Winkel (α) relativ zur ersten Schraubverbindung (6) bildet, und daß der Basisteil (1) eine innere geometrische Formgebung (20) hat, die so gestaltet ist, daß sie auf ein oberes Sechskant der Verankerung (19) paßt, um eine drehfeste Verriegelung zu bilden, die zwölf festgelegte Richtungen für den Adapter vorsieht.

2. Winkelförmiger Adapter nach Anspruch 1, dadurch **gekennzeichnet**, daß die erste Schraubverbindung (6) koaxial zu der Verankerung (19) ist und die zweite Schraubverbindung koaxial mit einer in die Zahnprothese eingegossenen Verbindungshülse (16) oder einer entsprechenden Verbindungsfläche in der Zahnprothese ist.

3. Winkelförmiger Adapter nach Anspruch 2, dadurch **gekennzeichnet**, daß die Verbindungshülse (16) oder die entsprechende Verbindungsfläche in der Zahnprothese die in dem Adapter durch die erste Schraubverbindung (6) gebildete Gewindebohrung (14) abdeckt.

4. Winkelförmiger Adapter nach Anspruch 3, **gekennzeichnet** durch eine Schulter (10), auf der die Verbindungshülse (16) oder die Zahnprothese selbst aufsitzt.

5. Winkelförmiger Adapter nach Anspruch 1, **gekennzeichnet** durch einen konischen Basisteil (1), einen segmentförmigen Zwischenteil (8) und einen konischen Oberteil (9).

6. Winkelförmiger Adapter nach Anspruch 1, dadurch **gekennzeichnet**, daß der feste Winkel (α) zwischen den Schraubverbindungen im Bereich zwischen 25° und 40° liegt.

## Revendications

1. Elément incliné de liaison pour un implant dentaire, cet élément étant adapté à une de ses extrémités pour être fixé à un pilier ou élément d'appui (19) implanté dans la mâchoire et ayant son autre extrémité adaptée à supporter une prothèse dentaire, élément caractérisé en ce qu'il est réalisé sous forme d'un élément unitaire comprenant une partie (1) de base pouvant être bloquée ou verrouillée en une position fixe empêchant une rotation par rapport à l'élément d'appui. grâce à une première jonction (6) par vis ou une première liaison filetée, et ayant une partie supérieure (9) ayant une seconde jonction par vis pour fixer la prothèse dentaire, ladite seconde jonction par vis formant un angle (α) fixe par rapport à la première jonction (6) par vis, et en ce que ladite partie (1) formant base comporte une configuration géométrique intérieure (20) conçue pour s'ajuster sur un hexagone supérieur de l'élément d'appui (19) de manière à constituer un verrouillage empêchant une rotation et fournissant douze directions fixes pour l'élément de liaison.

2. Elément incliné de liaison selon la revendication 1, caractérisé en ce que la première jonction (6) par vis ou jonction filetée a le même axe que l'élément (19) d'appui et la seconde jonction filetée a le même axe qu'un manchon (16) de connexion formé par coulée dans la prothèse dentaire ou une surface de connexion correspondante existant dans la prothèse dentaire.

3. Elément incliné de liaison selon la revendication 2, caractérisé en ce que le manchon (16) de connexion, ou la surface de connexion correspondante dans la prothèse dentaire respectivement, recouvre le trou (14) de vis formé, dans l'élément de liaison, par la première jonction filetée (6).

4. Elément incliné de liaison selon la revendication 3, caractérisé par la présence d'un épaulement (10) sur lequel le manchon (16) de connexion ou la prothèse dentaire elle-même repose.

5. Elément incliné de liaison selon la revendication 1, caractérisé par la présence d'une partie (1) en forme de base conique, d'une partie (8) intermédiaire segmentée et d'une partie supérieure (9) conique.

6. Elément incliné de liaison selon la revendication 1, caractérisé en ce que ledit angle (α) fixe entre les jonctions filetées se situe dans la gamme comprise entre 25° et 40°.
